# EUROPEAN PATENT SPECIFICATION

(11) **EP 3 436 506 B1**
(45) Date of publication and mention of the grant of the patent: **18.03.2020**
(21) Application number: 17713977.1
(22) Date of filing: 31.03.2017
(51) Int. Cl.: C08J 7/04, C09D 133/12, C09D 175/04, C09D 201/10

(54) **PROCESS FOR REPAIRING A COATING FILM, USE OF AN ADHESION PRIMER IN SUCH PROCESS, AND SUBSTRATE WITH A REPAIRED COATING FILM**
VERFAHREN ZUM REPARIEREN EINES BESCHICHTUNGSFILMS, VERWENDUNG EINER HAFTGRUNDIERUNG IN DIESEM VERFAHREN UND SUBSTRAT MIT EINEM REPARIERTEN BESCHICHTUNGSFILM
PROCEDE DE REPARATION DE COUCHES DE PEINTURES A L'AIDE D'UNE SEMI-COUCHE DE FOND A 2 COMPOSANTS

(30) Priority: 01.04.2016 EP 16163532
(43) Date of publication of application: 06.02.2019
(73) Proprietor: Akzo Nobel Coatings International BV, 6824 BM Arnhem (NL)
(72) Inventor: MÜLLER, Harald, 27798 Hude (DE); BÖLKE, Oliver, 49661 Cloppenburg (DE); ARENSBRUST, Carsten, 26121 Oldenburg (DE); RENGERS, Cathrin, 26131 Oldenburg (DE)
(74) Representative: Akzo Nobel IP Department
(86) International application number: PCT/EP2017/057715
(87) International publication number: WO 2017/167975

(56) References cited:
- WO-A1-2015/120941
- DE-A1- 19 927 041
- DE-A1-102005 026 523

## Description

### Field of the Invention

The present invention relates to a process for repairing a coating film comprising applying an adhesion primer directly to a substrate that is a substrate body with an original coating with defects, to obtain an adhesion-promoting layer and applying at least one further coating layer to the adhesion-promoting layer. The invention further relates to use of a specific adhesion primer to improve adhesion of a further coating layer to such substrate, and to a substrate coated with a coating film that has been repaired using such process.

### Background of the Invention

In various application areas there is a need for protective coatings fulfilling high mechanical demands, for example for surfaces of objects that are exposed to erosive substances at high speed. Such erosive exposure is in particular experienced by rotor blades of wind energy installations or helicopters, due to exposure to erosive solids or liquids, such as for example rain, hail, airborne sand, or bird droppings. Erosive influences are particularly strong in edge regions of the objects in question.

Surfaces of objects are typically protected against wear, in particular against erosion, by applying a protective coating or a protective coating system with multiple coating layers, to such surfaces. For effective erosion resistance, it is important to balance coating flexibility or elasticity and coating hardness. Excessive hardness and/or inadequate elasticity tend to be detrimental to effective erosion resistance.

Erosion will generally cause defects in anti-erosion protective coating films, and such films therefore require repair. Often, at least the surface of the upper coating film, i.e. the coating film exposed to the surface, is marked and/or damaged. The extent of the damage and the depth of penetration of a defect in the original coating system may vary. Defects also occur in the form of stress cracks in the substrate body or bursts in adhesive seams.

Defects are typically local imperfections in the original coating system, surrounded by intact zones of the original coating film. These imperfections may occur only in the topmost or outermost coating film, but may also penetrate more deeply into the underlying coating films. An imperfection may even extend through the entire original coating system down to the substrate body, and may even lead to damage to the substrate body. Typically, there is a mixed pattern of depths of penetration of defects. Due to the different depths of penetration of the imperfections, different surfaces, interfaces, and boundary edges may be exposed to the substrate surface.

Typically, defects are repaired locally by restoring the protective and/or decorative function of the original coating film in the area where the original coating is damaged. In the repair of defects, the damaged locations are often freed from residues of the original coating or other unwanted substances, e.g. corrosion products, sand, or bird droppings, by cleaning and sanding. If the substrate body itself is damaged, it may be necessary to repair the substrate body by filling defects with a filler such as a putty, before repairing the coating film. In that respect, WO 2015/120941 discloses a 2k-coating composition comprising (i) a polycarbonate diol, a polyaspartic acid ester, an organosilane modified filler and (ii) an isocyanurate compound modifed with polyester groups.

In the repair of coating films, the adhesion strength between the surface to be repaired and a refinish coating layer is often inadequate. Problems with adhesion strength arise not least because of the presence of heterogeneous substrates and of different interfaces. Firstly, the refinish coating needs to adhere to a substrate which is often very heterogeneous. The substrate may for example have original coating, uncoated substrate body, and putty-filled patches of substrate body exposed to its surface. Secondly, the refinish coating needs to adhere to several interfaces and boundary edges between the damaged, cleaned, and sanded locations and the intact original coating that surrounds these locations.

This challenge is often mastered by using an adhesion primer, often referred to as adhesion promoter, tie agent, or priming coat, which typically strengthens the adhesion of different materials to each other.

In view of the variety of substrate bodies and original coating systems used in the lightweight construction industry (aerospace industry, wind energy), the repair of protective coatings still presents a challenge. The adhesion primer must be carefully selected, since not every adhesion primer is suitable for any type of substrate. For instance, adhesion primers suitable for epoxy resin-based, glass fiber-reinforced substrates are typically not suitable for glass fiber-reinforced substrate bodies based on unsaturated polyester resins. The repair of an original coating system becomes more challenging when the nature of the substrate body and/or of the original coating system to be repaired is unknown. Moreover, a substrate to be repaired may be heterogeneous, by having exposed to its surface intact regions of its original coating system, exposed regions of the substrate body and/or regions that have been filled, for example with a repair putty. Reference herein to heterogeneous substrates is to substrates which have different materials exposed to its surface.

There is a need in the art for a process for repairing a coating film, in particular for repairing coating films on heterogeneous substrates and/or damaged substrates and/ or on substrates of which the composition of substrate body and/or original coating is not known, that can be applied without the need to first assess the exact nature of the substrate.

### Summary of the Invention

It has now been found that by using an adhesion primer that comprises a binder component (A) comprising a hydroxy-functional (meth)acrylate resin and a hydroxy-functional epoxy resin and a curing component (B) comprising a polyisocyanate and an epoxy-functional organosilane, coating films on substrates can be repaired, even if the substrate is a heterogeneous substrate or a substrate of which the composition of the exposed surfaces is not known.

Accordingly in a first aspect, the present invention provides a process for repairing a coating film comprising:
(1) applying an adhesion primer directly to a substrate;
(2) forming a polymer film from the applied adhesion primer to obtain an adhesion-promoting layer;
(3) applying a further layer of coating composition to the adhesion-promoting layer; and subsequently
(4) allowing the further layer of coating composition to cure to form a further coating layer,
   wherein the substrate is a substrate body with an original coating that has defects,
   wherein the adhesion primer comprises components (A) and (B), wherein component (A) is a binder component comprising:
   (A1) a hydroxy-functional (meth)acrylate resin; and
   (A2) a hydroxy-functional epoxy resin,
   and component (B) is a curing component comprising:
   (B1) a polyisocyanate; and
   (B2) an epoxy-functional organosilane.

By using the process according to the invention, strong adhesion is achieved not only between the original coating and the protective coating layer applied during the repair process (the further coating layer or refinish coating), but also between the refinish coating and the substrate body of the heterogeneous substrate to be repaired, and between the refinish coating and the respective interfaces and boundary edges between damaged, cleaned, and sanded locations and regions surrounding these locations that may have intact original coating system.

In a further aspect, the invention relates to use of an adhesion primer as specified hereinabove to improve the adherence of a further coating layer to a substrate that is a substrate body with an original coating that has defects, wherein the substrate body is preferably of glass fiber-reinforced unsaturated polyester resin, of glass fiber-reinforced epoxy resin, or of glass fiber-reinforced vinyl ester resin, wherein the substrate optionally has putty-filled defects, and wherein the further coating layer preferably is a polyurethane resin based coating.

In a third aspect, the invention provides a substrate coated with a coating film that has been repaired according to a process as hereinbefore defined.

### Detailed Description of the Invention

The process according to the invention is a process for repairing a coating film by (1) applying an adhesion primer to a substrate that is a substrate body with an original coating that has defects, (2) allowing a polymer film to be formed from the applied adhesion primer to obtain an adhesion-promoting layer, (3) applying a further layer of coating composition to the adhesion-promoting layer, and subsequently (4) allowing the further layer of coating composition to cure to form a further coating layer.

The substrate body is preferably a substrate body as typically used in the lightweight construction industry. The substrate body may be made of any suitable material, preferably of metal or a synthetic material such as a polymeric material. More preferably, the substrate body is made of polyvinyl chloride, aluminum, or a glass fiber-reinforced synthetic polymeric material, even more preferably a glass fiber-reinforced unsaturated polyester resin, epoxy resin, or vinyl ester resin, still more preferably a glass fiber-reinforced unsaturated polyester resin or glass fiber-reinforced epoxy resin.

Glass fiber-reinforced synthetic polymeric materials, also referred to as glass fiber-reinforced plastics (GRP), are well known in the art. These are composite materials with glass fibers incorporated in a synthetic polymeric matrix. They are also referred to as glass mat-reinforced plastics when glass mats have been used to reinforce the plastics. The glass materials used for fiber reinforcement, particularly those comprising E glass (alumino-borosilicate glass, electrically insulating) and S glass (aluminosilicate glass, high strength), are present within the GRP in the form of fibers, yarns, rovings (glass silk strands), nonwovens, woven fabrics, or mats. The polymeric matrices may be either thermosets, with preference being given in particular to unsaturated polyester resins, epoxy resins, or vinyl resins, or thermoplastics (e.g. polyamides).

The original coating may be any protective and/or decorative coating, preferably a protective coating, in particular an anti-erosion coating. The original coating may be a coating system comprising several coating layers.

The substrate is a substrate body with an original coating that has defects in the original coating, preferably defects caused by mechanical action such as defects caused by erosive exposure as has been described hereinbefore.

Reference herein to adhesion is to the entirety of bonding forces between a coating layer and a substrate. The strength of adhesion depends on the properties, in particular the surface tension, of both the coating layer and the substrate. Typically, strength of adhesion is good when the substrate is wetted by the coating material. In case of rough substrate surfaces, mechanical anchoring may play a significant role. High strength of adhesion is a prerequisite for good mechanical and protective properties of a coating, such as corrosion prevention or erosion prevention. The strength of adhesion of a coating layer may be determined directly by means of a pull-off test, and indirectly by means of a cross-cut test. Typically, adhesion strengths of at least 5 N/mm² are considered as good adhesion.

### The adhesion primer

The adhesion primer used in the process according to the invention is a two-component (2K) adhesion primer composition. Binder component (A) and curing component (B) are prepared and stored separately and combined shortly before application. The pot life is dependent on the constituents used, more particularly on the polyisocyanate and the (meth)acrylate and epoxy resin. Reference herein to pot life is the time during which the adhesion primer can be applied at a temperature in the range of from 15 °C to 35 °C without the viscosity increasing, e.g. as a result of crosslinking reactions, to the extent that application is no longer possible. The pot life of the adhesion primer is typically 45 to 60 minutes.

### Binder component (A)

Binder component (A) of the adhesion primer comprises at least one hydroxy-functional (meth)acrylate resin (A1) and at least one hydroxy-functional epoxy resin (A2) as curable binder polymers.

The adhesion primer is at least partially chemically curable. Preferably, the adhesion primer is chemically and physically curable. Reference herein to "physically curing" is to the formation of a polymer film by loss of solvent from a polymer solution or polymer dispersion. Reference herein to "chemical curing" is to the formation of a polymer film by chemical crosslinking of reactive functional groups. Such crosslinking may be self-crosslinking and/or external crosslinking. If complementary reactive functional groups are present in a polymer, self-crosslinking may occur. External crosslinking for example occurs when functional groups of a polymer react with complementary functional groups of a crosslinking or curing agent.

A binder polymer may have both self-crosslinking and externally crosslinking functional groups, and/or may be combined with a crosslinking agent.

Given that the adhesion primer comprises at least one hydroxy-functional (meth)acrylate resin (A1), a hydroxy-functional epoxy resin (A2), and a polyisocyanate (B1), the adhesion primer is at least partially externally crosslinking. Typically, the adhesion primer also partially undergoes physical curing when applied to a substrate.

Further polymers, including self-crosslinking polymers, may be present in the adhesion primer. The adhesion primer may therefore be partially self-crosslinking.

The binder component (A) of the adhesion primer comprises at least one hydroxy-functional (meth)acrylate resin (A1).

Meth(acrylate) resins, also called poly(meth)acrylate resins, are polymeric organic compounds based on acrylate and/or methacrylate monomers. Reference herein to (meth)acrylate is to acrylates and/or methacrylates and/or compounds which contain or are derived from acrylates and/or methacrylates. Examples of acrylate and methacrylate monomers include various alkyl (meth)acrylates and cycloalkyl (meth)acrylates, such as: ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, amyl acrylate, amyl methacrylate, hexyl acrylate, hexyl methacrylate, ethylhexyl acrylate, ethylhexyl methacrylate, 3,3,5-trimethylhexyl acrylate, 3,3,5-trimethylhexyl methacrylate, stearyl acrylate, stearyl methacrylate, lauryl acrylate, or lauryl methacrylate, and cycloalkyl acrylates such as cyclopentyl acrylate, cyclopentyl methacrylate, isobornyl acrylate, isobornyl methacrylate, cyclohexyl acrylate, and cyclohexyl methacrylate.

Due to their reduced UV stability, aromatic (meth)acrylates are preferably not used. For economic reasons, however, such aromatic (meth)acrylates may be used in the adhesion primer, if UV stability plays a minor role, for example if the UV stability is provided by a coating film applied over the adhesion primer. Preferably, the alkyl (meth)acrylate in the adhesion primer is not an aromatic (meth)acrylate.

The (meth)acrylate resin (A1) is hydroxyl-functional. Such hydroxyl-functionality is obtained by using acrylate and methacrylate monomers having hydroxyl groups. Suitable hydroxyl-containing monomer building blocks for preparing the poly(meth)acrylate resin include for example hydroxyalkyl (meth)acrylate, such as 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, and in particular 4-hydroxybutyl acrylate and/or 4-hydroxybutyl methacrylate.

Vinylaromatic hydrocarbons such as vinyltoluene, alpha-methylstyrene, styrene, amides or nitriles of acrylic or methacrylic acid, vinyl esters, vinyl ethers, and in particular, acrylic and/or methacrylic acid may be used as further monomer building blocks for the hydroxy-functional (meth)acrylate resin.

Hydroxy-functional (meth)acrylate resin (A1) may be prepared by any suitable process known in the art.

The hydroxyl number of the hydroxy-functional (meth)acrylate resin (A1) is preferably in the range of from 75 to 500 mg KOH/g, more preferably of from 100 to 400 mg KOH/g, even more preferably of from 150 to 300 mg KOH/g, and still more preferably of from 200 to 250 mg KOH/g. The hydroxyl number in the context of the present invention is determined according to DIN EN ISO 4629.

The content of the hydroxy-functional (meth)acrylate resin (A1) in the adhesion primer is preferably in the range of from 20 to 80 wt%, more preferably of from 30 to 70 wt%, especially preferably of from 40 to 60 wt%, based on the film-forming solids content, i.e. resins and curing agents, of the adhesion primer.

Reference herein to film-forming solids content is to the content of non-volatile components other than non-film-forming components such as pigments, fillers, catalysts and further additives such as e.g. defoamers (DIN EN ISO 4618:2015-01).

Binder component (A) of the adhesion primer further comprises at least one hydroxy-functional epoxy resin (A2).

Epoxy resins are polycondensation resins that contain more than one epoxide group in the basic molecule. They are preferably epoxy resins prepared by condensing the bisphenol A or bisphenol F with epichlorohydrin. These compounds contain hydroxyl groups along the chain and epoxide groups at the ends. The capacity for crosslinking by way of the epoxide groups and/or by way of the hydroxyl groups changes with the chain length of the epoxy resins. Whereas an increase in chain length or molar mass is accompanied by a drop in the capacity for crosslinking by way of epoxide groups, the crosslinking capacity by way of the hydroxyl groups increases as the chain length grows. In binder component (A) any epoxy resin known in the art may be used.

The hydroxy-functional epoxy resin (A2) preferably has an epoxide group content in the range of from 150 to 2,500 mmol of epoxide groups per kg of resin (mmol/kg), more preferably of from 200 to 1,500 mmol/kg, even more preferably of from 250 to 400 mmol/kg. The amount of epoxide groups per kg of resin is determined in accordance with DIN EN ISO 3001.

The hydroxy-functional epoxy resin (A2) preferably has a hydroxyl group content in the range of from 2,000 to 6,000 mmol of hydroxyl groups per kg of resin (mmol OH/kg), more preferably of from 3,000 to 5,000 mmol OH/kg, even more preferably of 3,300 to 4,000 mmol OH/kg. The amount of hydroxyl groups per kg of resin is determined in accordance with DIN EN ISO 4629.

The glass transition temperature (T_{g}) of the hydroxy-functional epoxy resin is preferably in the range of from 25 to 90°C. The glass transition temperature is determined in accordance with DIN EN ISO 11357 (10 K/min heating rate).

The content of the hydroxy-functional epoxy resin (A2) in the adhesion primer is preferably in the range of from 1 to 40 wt%, more preferably of from 2 to 30 wt%, even more preferably of from 5 to 20 wt%, based in on the film-forming solids content of the adhesion primer.

The at least one hydroxy-functional (meth)acrylate resin (A1) and the at least one hydroxy-functional epoxy resin (A2) are preferably used in a weight ratio in the range of from 10:1 to 2:1, more preferably of from 7:1 to 4:1. The skilled person is able to control the balance between reduced strength of adhesion (excess of hydroxy-functional (meth)acrylate resin) and longer drying times (excess of hydroxy-functional epoxy resin).

### Curing component (B)

Curing component (B) of the adhesion primer comprises at least one polyisocyanate (B1) and at least one epoxy-functional organosilane (B2).

Organic polyisocyanates, i.e. aliphatic and aromatic components containing on average more than one isocyanate group per molecule, are known in the art. Curing component (B) may comprise an aliphatic or aromatic polyisocyanate, including di-isocyanate or a dimer or trimer thereof such as a uretdione or an isocyanurate. The polyisocyanate may for example be hexamethylene di-isocyanate, octamethylene di-isocyanate, decamethylene di-isocyanate, dodecamethylene di-isocyanate, tetradecamethylene di-isocyanate, trimethylhexane di-isocyanate, tetramethylhexane di-isocyanate, isophorone di-isocyanate (IPDI), 2-isocyanatopropylcyclohexyl isocyanate, dicyclohexylmethane 2,4'-di-isocyanate, dicyclohexylmethane 4,4'-diisocyanate, 1,4- or 1,3-bis(isocyanatomethyl)cyclohexane, 1,4-, 1,3- or 1,2-di-isocyanatocyclohexane, 2,4- or 2,6-di-isocyanato-1-methylcyclohexane, or a dimer or trimer thereof, or a mixture of two or more thereof.

Preferably, the polyisocyanate is an aliphatic polyisocyanate, more preferably hexamethylene di-isocyanate and/or a dimer or trimer thereof.

The isocyanate groups in component (B1) may be free or blocked isocyanate groups. The isocyanate groups are preferably non-blocked. The adhesion primer is preferably preferably free of polyisocyanates with blocked isocyanate groups.

The content of the at least one polyisocyanate (B1) in the adhesion primer is preferably in the range of from 10 to 60 wt%, more preferably of from 20 to 50 wt%, even more preferably of from 30 to 40 wt%, based on the film-forming solids content of the adhesion primer.

Curing component (B) further comprises at least one epoxy-functional organosilane (B2). Organosilanes are compounds derived from pure silanes, i.e. binary compounds consisting of Si and H, in which part of the hydrogen is substituted by an organic moiety connected via a carbon atom to the silicon atom. Organosilanes thus contain at least one Si-C bond.

The epoxy-functional organosilane (B2) comprises an epoxide functional moiety. The epoxy-functional moiety is such that it is not hydrolyzable. An example of a possible epoxy-functional organic moiety is an alkyl moiety which has an epoxide functional group and a bridging heteroatom, preferably an oxygen atom, in its primary carbon chain. The alkyl moiety may comprise other functional groups. Epoxy-functional organosilanes include those compounds in which all Si-bonded hydrogen moieties present in a pure silane are substituted by other moieties, provided that there is at least one Si-C bond to an organic moiety which contains an epoxide group. Moieties by which the hydrogen moieties may be substituted include, in addition to the organic moieties described above, amino groups, halogens, and alkoxy or alkyl groups. Such organosilanes may be monomeric, oligomeric, or polymeric in character. Preference is given to organic moieties which do not chemically react with other components of curing composition (B), more particularly not with polyisocyanate (B1), when binder component (A) and curing component (B) are mixed. Preferred further organic moieties are alkoxy groups, more particularly methoxy or ethoxy groups.

Preferably, epoxy-functional organosilane (B2) has the following general formula (1):

X₄₋ₙSi-(R-E)ₙ (I)

wherein
X is a halogen, an alkyl or alkoxy group, or H, preferably a methoxy or ethoxy group; R is an organic divalent radical with a primary carbon chain with at least one alkylene moiety, preferably two alkylene moieties and a bridging heteroatom, preferably a bridging oxygen atom, wherein the primary carbon chain preferably has 4 to 12 carbon atoms; E is an epoxy group; and n is 1, 2 or 3, preferably 1.

In a preferred embodiment the epoxy-functional organosilane has a group R which possesses a bridging oxygen atom in the primary C₄-C₁₂ carbon chain and is connected to an epoxy group (E), and has three radicals X as defined above, which are preferably methoxy or ethoxy radicals.

Through appropriate choice of the substituents, it is possible to modify the epoxy-functional organosilane. The use of the epoxy-functional organosilane leads, through corresponding physical adsorption and possibly chemical reaction, to appropriate bonding of the organic polymer matrix composed of hydroxy-functional (meth)acrylate resin (A1) and hydroxy-functional epoxy resin (A2) to the heterogeneous substrate, since said matrix in particular exhibits a correspondingly improved compatibility with the polymers of the original coating system and with the substrate body. As a result, outstanding adhesion strength of the adhesion primer to substrates may be achieved, especially to heterogeneous substrates such as those used in the lightweight construction industry, such as rotor blades of wind energy installations.

An alternative modification, besides or instead of the use of epoxy-functional organosilanes of formula (I), is the use of other epoxy-functional organosilanes, for example epoxy-functional organosilanes of higher molecular mass. Such epoxy-functional organosilanes are also referred to as oligomeric or polymeric epoxy-functional organosilanes and may comprise two or more epoxy-functional organosilanes of formula (I) which are condensed with each other via the hydrolyzable groups present.

Examples of suitable epoxy-functional organosilanes include: (2-glycidyloxyethyl)trimethoxysilane, (3-glycidyloxypropyl)trimethoxysilane, (3-glycidyloxypropyl)triethoxysilane, (3-glycidyloxypropyl)tripropoxysilane, (4-glycidyloxybutyl)triethoxysilane, (4-glycidyloxybutyl)tripropoxysilane, (4-glycidyloxybutyl)dimethoxypropoxysilane, 2-(3,4-epoxycyclohexyl)-ethyltrimethoxysilane, 2-(3,4-epoxycyclohexyl)ethyltriethoxysilane, (3,4-epoxycyclohexyl)ethyltrimethoxysilane, 1,3-bis(3-glycidyloxypropyl)-tetramethyldisiloxane, and the homogeneous and heterogeneous oligomers and polymers thereof. Preferably, the epoxy-functional organosilane is (3-glycidyloxypropyl)trimethoxysilane.

The content of the epoxy-functional organosilane (B2) in the adhesion primer is preferably in the range of from 0.1 to 20 wt%, more preferably of from 0.5 to 10 wt%, even more preferably of from 1.0 to 5.0 wt%, based on the film-forming solids content of the adhesion primer.

### Further components of adhesion primer

The adhesion primer typically further comprises an organic solvent. Examples of suitable solvents include aliphatic and/or aromatic hydrocarbons such as toluene, xylene, solvent naphtha, Solvesso 100, or Hydrosol® (from ARAL), ketones, such as acetone, methyl ethyl ketone or methyl amyl ketone, esters, such as ethyl acetate, methoxypropyl acetate, ethoxypropyl acetate, butyl acetate, butyl glycol acetate, pentyl acetate or ethyl ethoxypropionate, ethers, alcohols, chlorinated hydrocarbons, or mixtures of the aforesaid solvents.

The adhesion primer may also include at least one additive. Examples of such additives are pigments, fillers, molecularly dispersible soluble dyes, nanoparticles, light stabilizers, catalysts, initiators of radical polymerizations, defoamers, flow control agents, film-forming agents, thickeners, sag control agents (SCAs), corrosion inhibitors, biocides, and matting agents. They are used in the customary and known amounts.

The solids content of the adhesion primer may vary according to the requirements of the specific case. The solids content is guided primarily by the viscosity that is needed for application and by the attainable dry film thickness. The solids content of the adhesion primer is preferably in the range of from 20 to 50 wt%, more preferably of from 25 to 45 wt%, and even more preferably of from 30 to 40 wt%.

Reference to solids content is to the weight percentage which remains as a residue on evaporation under specified conditions. In the present specification the solids content, unless explicitly indicated otherwise, is determined according to DIN EN ISO 3251. For that purpose the adhesion primer is evaporated at 130°C for 60 minutes.

In the process according to the invention, the adhesion primer is applied directly to a substrate. Directly applying means that, before the adhesion primer is applied, no other coating material capable of forming a polymer film is applied to the substrate. After optional putty filling of local defects to remedy unevennesses in the substrate body, the adhesion primer is the first coating material applied on the substrate of which the original coating has to be repaired.

The adhesion primer may be applied to the damaged substrate in a film thickness (wet film thickness) customary in the lightweight construction industry, typically in the range of from 5 µm to 50 µm, preferably of from 10 µm to 30 µm. Known application techniques may be used, such as rolling, spraying, spreading, pouring, dipping, or impregnating. Preference is given to rolling or spreading techniques.

In step (2), a polymer film is formed from the applied adhesion primer to obtain an adhesion-promoting layer. The polymer film is formed by allowing the applied adhesion primer to cure fully or partially by known and customary techniques. The applied adhesion primer may first be partially cured, for example by flashing off, before being fully cured together with curing of the further layer of coating composition. Curing may be chemical or physical curing or a combination thereof.

If chemically cured, the adhesion primer is preferably cured at a temperature in the range of from 10 to 60°C, more preferably of from 15 to 35°C. Curing time for chemical curing is typically between 5 minutes and 6 hours, preferably between 20 minutes and 2 hours.

If the adhesion primer is partially physically cured, such physical curing preferably takes place at a temperature in the range of from of 10 to 60°C, more particularly of 15°C to 35°C. The time needed for such partial physical curing depends on the adhesion primer used and on the curing temperature. If the adhesion primer is first partially physically cured followed by chemical curing together with curing of the further layer of coating composition, preference is given to an adhesion primer that provides, at the curing temperature, a tack-free coating that can be recoated within 60 minutes, more preferably within 30 minutes, even more preferably 15 minutes.

Chemical curing may be preceded by flashing off and/or by drying. Flashing off and drying refers to evaporation of organic solvents through which the coating material becomes dry, but not yet fully cured. A fully crosslinked coating film has thus not yet been formed.

In step (3), a further layer of coating composition is applied on top of the adhesion-promoting layer formed in step (2). The further coating composition may be any coating composition known to be capable of forming a coating film based on a polymeric matrix. The further coating composition may be applied by techniques known in the art. The thickness in which the further coating composition is applied (wet film thicknesses) is typically in the range of from 10 µm to 800 µm, preferably of from 50 µm to 600 µm. Application is followed by curing of the coating composition in step (4), by techniques known in the art. More than one further coating layer may be applied by repeating steps (3) and (4). Successive further coating layers may be produced by applying layers of coating composition in succession without fully curing the individual layers before a successive layer is applied and then fully curing the respective layers in a joint curing step (wet-on-wet method). Preferably, all layers of further coating composition are separately and fully cured before a next layer is applied.

If the process is used for repairing coating films on substrates used in the lightweight construction industry, the further coating layer preferably is a single-coat anti-erosion coating layer, more preferably a layer formed from a (2K) polyurethane-based coating composition. For repairing coating films on rotor blades of wind energy installations, the further coating composition preferably is a Leading Edge Protection (LEP) coating, more preferably based on a polyurea-polyurethane resin.

Curing of the adhesion primer and the further coating composition(s) results in a repaired coating on a substrate with an original coating with defects. Thus, a substrate coated with a coating film that has been repaired is produced.

### Examples

The invention is further illustrated by means of the following non-limiting examples.

### Tensile adhesive testing with a pull-off test

Adhesion strength is determined by means of a pull-off test or by tensile adhesive testing following standard DIN EN ISO 4624. From standard DIN EN ISO 4624 it is apparent that the test results represent the minimum tensile stress required to break the weakest interface (adhesive fracture) or the weakest point (cohesive fracture) in the test setup. A combination of adhesive fracture and cohesive fracture can also occur (mixed fractures). Herein, a fracture at a tensile adhesive value of at least 8 MPa is referred to as an adhesive fracture; a fracture at a tensile adhesive value of at least 5 MPa as a cohesive fracture. The location of the fracture in the system, i.e. the location at which the strength of adhesion is lower than the force applied, is specified by means of a letter of the alphabet. The respective layers are identified starting at A for the substrate body, through B for the first coating layer, C for the second coating layer, etc., through Y for the adhesive used, and Z for the testing die (the latter also being referred to as the dolly). If cohesive fracture occurs in the substrate body, this is referred to as a category A fracture. If the fracture occurs between the first applied coating layer and the substrate body, this is referred to as a category A/B fracture. Fractures often occur in more than one category.

The pull-off tests for investigating adhesion strength were carried out on planar, uniform surfaces, in order to allow a meaningful assessment in accordance with DIN EN ISO 4624. Accordingly, the substrate tested was not a heterogeneous substrate comprising substrate body with a partly intact original coating system in a direct pull-off test, since such a substrate would not offer a planar bond base. However, the investigation on planar surfaces of different kinds allows meaningful conclusions to be drawn about the strength of adhesion to optionally putty-filled substrate bodies, the original coating system, and to further coating films, respectively.

### Production of adhesion primer E1

Two-component adhesion primer E1 for use in the process according to the invention was produced by mixing a binder component (A) (Table A) with a curing component (B) (Table B). The components listed in Table A are stirred together in the order listed, and form binder component (A) of adhesion primer E1. Curing component (B) is produced by stirring together the components listed in Table B. Shortly before application, components A and B are combined in a mixing ratio of 2:1 (by weight). The pot life is 45 minutes.

**Table A: Binder component of adhesion primer E1**

| Component | Parts by weight |
|---|---|
| Hydroxy-functional acrylate resin, solids content 72% in xylene/Shellsol A/Butoxyl (2/2/1) v/v/v | 37.5 |
| Hydroxy-functional epoxy resin, Mw 4,000, solids content 40% in xylene/1-methoxyprop-2-yl acetate (1/2) v/v | 12.5 |
| Bis(dodecylthio)dimethylstannane, 85% in solvent, catalyst for polyurethane systems | 0.025 |
| Butyl acetate 98-100% | 12.45 |
| BYK®-077, 52% in alkylbenzenes (from BYK-Chemie) | 0.025 |
| Methyl ethyl ketone | 37.5 |

**Table B: Curing component of adhesion primer E1**

| Component | Parts by weight |
|---|---|
| Hexamethylene 1,6-di-isocyanate (solids content 75%) in 1-methoxyprop-2-yl acetate/xylene (1 / 1) v/v | 50 |
| Black pigment (solids content 20%) in ethoxypropyl acetate | 0.5 |
| Glycidyloxypropyltrimethoxysilane, 99% | 2.5 |
| Solvent naphtha 160/180 | 47 |

### Adhesion strength of different coating systems to glass fiber-reinforced substrate bodies and strength of interlaminar adhesion

Adhesion primer E1 and comparative adhesion primer V1 were compared for their adhesion strength to glass fiber-reinforced substrate bodies based on unsaturated polyester resins or on epoxy resin. Interlaminar adhesion in various multi-coat paint systems was also tested. An overview of the systems tested is given in Table 1.

### Index to abbreviations

- GRP: glass fiber-reinforced plastic
- UP: unsaturated polyester resin
- EP: epoxy resin
- V1: comparative adhesion primer, polyurea-based (made from a bis-N,N'-substituted aspartic di-ester and a di-isocyanate) (RELEST® Wind Adhesion Promoter from series I367, from BASF Coatings GmbH)
- E1: adhesion primer for use in the process according to the invention
- L1: leading edge protection coating based on polyurea-polyurethane (RELEST® Wind LEP ETU from series I374, from BASF Coatings GmbH)
- L2: 2K epoxy resin coating (RELEST® Protect from series I346, from BASF Coatings GmbH)
- L3: polyurea coating (based on aspartic di-ester) (RELEST® Wind Gelcoat from series 1372, from BASF Coatings GmbH)
- L4: acrylic polyurethane coating (RELEST® Wind HS Topcoat from series 1306, from BASF Coatings GmbH)
- L5: polyurethane-based filling putty (RELEST® Wind Putty Contour from series 1373, from BASF Coatings GmbH)

**Table 1: Coating systems tested on glass fiber-reinforced polymeric substrate bodies**

| Substrate | System 1 | System 2 | System 3 | System 4 | System 5 | System 6 | System 7 |
|---|---|---|---|---|---|---|---|
| GRP substrate body | UP | UP | UP | UP | UP | EP | EP |
| Film 1 | V1/E1 | V1/E1 | L2 | L2 | L2 | V1/E1 | L5 |
| Film 2 | | L1 | V1/E1 | L3 | L4 | L1 | V1/E1 |
| Film 3 | | | L1 | V1/E1 | V1/E1 | | L1 |
| Film 4 | | | | L1 | L1 | | |

### Example 1 - System 1

Adhesion primer E1 and comparative adhesion primer V1 were tested for their strength of adhesion to glass fiber-reinforced substrate bodies based on unsaturated polyester resins.

### Sample preparation

A glass fiber-reinforced substrate body based on an unsaturated polyester resin, with a thickness of 5 mm, was sanded with sandpaper (80 grade, from Sia). On one part of the substrate body, adhesion primer V1 was applied; on another part of the substrate body adhesion primer E1 was applied. Both adhesion primers were applied with a wet film thickness of 10 µm using a MicroCrater roller (from Friess), at 20°C and 50% relative humidity. The primed substrate bodies were dried at 23°C for 7 days to allow the applied adhesion primers to cure and to form an adhesion-promoting layer.

### Preparation for pull-off test

The dried surface was then roughened with P120 sandpaper (from Starcke Schleifmittelwerk) and de-dusted using Staubfix standard 456/1 (from Pajarito). A testing die of aluminum with a diameter of 2 cm was bonded to the adhesion-promoting layer using 2015 Araldite 2000+ adhesive (from Huntsman). For this purpose, the entire system was fixed for a duration corresponding to the curing time of the adhesive (at least 24 hours at about 23°C).

### Pull-off test

After a day of conditioning of the test system at 23°C and 50% relative humidity in accordance with DIN EN 23270, the pull-off test was carried out in triplicate with a Positest AT-A instrument (from DeFelsko). The results are set out in Table 2.

**Table 2: Results of tensile adhesion testing for System 1**

| System 1: Substrate body-V1 | | | | System 1: Substrate body-E1 | | |
|---|---|---|---|---|---|---|
| Dolly | Adhesion force [MPa] | Fracture pattern | | Dolly | Adhesion force [MPa] | Fracture pattern |
| 1 | 4.77 | 100% A/B | | 1 | 8.94 | 50% A, 50% Y |
| 2 | 4.88 | 100% A/B | | 2 | 9.67 | 60% A, 40% Y |
| 3 | 3.39 | 100% A/B | | 3 | 9.08 | 60% A, 40% Y |
| Ø | 4.35 | 100% A/B | | Ø | 9.23 | 57% A, 43% Y |
| σ ± | 0.83 | | | σ ± | 0.39 | |

| | | | | | | |
|---|---|---|---|---|---|---|
| Key: A cohesive fracture in the substrate body A/B adhesive fracture between substrate body and adhesion primer B cohesive fracture in adhesion primer B/Y adhesive fracture between adhesion primer and adhesive Y cohesive fracture in adhesive Y/Z adhesive fracture between adhesive and dolly | | | | | | |

The results show that adhesion primer E1 exhibits outstanding adhesion to the substrate, since cohesive fractures only occurred in the substrate body and in the adhesive. Adhesion primer V1 adheres significantly poorer to the substrate body: tensile adhesion values are below 5 MPa and adhesive fractures occur between substrate body and adhesion primer.

### Strength of adhesion after exposure to condensation water (System 1).

The sample with adhesion primer E1, prepared as described above under "Sample preparation" was stored for 1,000 hours at 40°C and a relative humidity of 100%. The water was then wiped off the surface and after one hour, the surface was prepared for the pull-off test as described above. The pull-off test was carried out six times in each case with the Positest AT-A instrument (from DeFelsko). The results are set out in Table 3.

**Table 3: Tensile adhesion in System 1 after exposure to condensation water**

| **System 1: Substrate body-E1** | | |
|---|---|---|
| Dolly | Adhesion force [MPa] | Fracture pattern |
| 1 | 9.80 | 80% A, 20% Y |
| 2 | 9.86 | 70% A, 30% Y |
| 3 | 9.92 | 60% A, 40% Y |
| 4 | 10.55 | 80% A, 20% Y |
| 5 | 8.85 | 60% A, 40% Y |
| 6 | 9.04 | 70% A, 30% Y |
| Ø | 9.67 | 70% A, 30% Y |
| σ ± | 0.63 | |

| | | |
|---|---|---|
| Key: as for Table2 | | |

The results show that adhesion primer E1 retains its outstanding strength of adhesion to the glass fiber-reinforced substrate body based on unsaturated polyester resins, even after exposure to condensation water. Cohesive fractures occur primarily in the substrate body. Moreover, no blistering, clouding, cracking, or other visible change to the adhesion primer E1 was observed.

### Example 2 - System 2

Adhesion primer E1 and comparative adhesion primer V1 were investigated for their strength of adhesion to a glass fiber-reinforced substrate body based on an unsaturated polyester resin and also for their strength of adhesion to a polyurea-polyurethane coating L1.

Adhesion primer V1 and adhesion primer E1 were applied to the substrate body as described for System 1 under Sample preparation. Instead of drying for 7 days at 23 °C, solvent was flashed off time during 30 minutes to allow formation of a partially cured adhesion-promoting layer. Subsequently, a commercially available anti-erosion leading edge protection coating composition L1 was applied in a wet film thickness of 350 µm using an Ultra Flock roller (from Friess) to adhesion primer layer V1 or E1, at 20 °C and 50% relative humidity. After application of coating layer L1, the complete system was dried at 23°C for 7 days to allow curing of the applied layers.

### Preparation for pull-off test

The dried surface was roughened with P180 sandpaper (from Starcke Schleifmittelwerk) and cleaned with isopropanol. The sanded and cleaned surface was further prepared for pull-off testing as described for the sanded and cleaned surface of System 1.

### Pull-off test

Pull-off tests were carried out as described for System 1. The results are set out in Table 4.

**Table 4: Results of tensile adhesion testing for System 2**

| **System 2: Substrate body-V1-L1** | | | | **System 2: Substrate body-E1-L1** | | |
|---|---|---|---|---|---|---|
| Dolly | Adhesion force [MPa] | Fracture pattern | | Dolly | Adhesion force [MPa] | Fracture pattern |
| 1 | 6.18 | 100% C | | 1 | 6.73 | 50% A, 50% C |
| 2 | 6.25 | 100% C | | 2 | 6.61 | 10% A, 90% C |
| 3 | 6.72 | 100% C | | 3 | 6.53 | 10% A, 90% C |
| Ø | 6.38 | 100% C | | Ø | 6.62 | 23% A, 77% C |
| σ ± | 0.29 | | | σ ± | 0.10 | |

| | | | | | | |
|---|---|---|---|---|---|---|
| Key: A, A/B, B, Y, and Y/Z as for Tables 2 and 3 B/C adhesive fracture between adhesion primer V1 or E1 and L1 C cohesive fracture in L1 C/Y adhesive fracture between L1 and adhesive | | | | | | |

To assess the interlaminar adhesion of System 2, a cutting test was carried out. With a sharp blade, a right-angled cross (St. Andrews cross) was cut into the coating film, down to the substrate body, and subsequently an attempt was made to peel off the coating film.
For the system with adhesion primer V1, it was possible to easily peel off areas of coating film from the substrate. For the system with adhesion primer E1, it was not possible to peel off any coating film.

The results of the tensile adhesion test (Table 4) show that the application of the polyurea-polyurethane coating L1 masks the inadequate adhesion strength of comparative adhesion primer V1 to the substrate (compare System 1, Table 2). Compared to System 1, the tensile adhesive forces in System 2 primarily act on the elastic coating film L1. This follows from the fact that no adhesive fractures occur between substrate and adhesion primer V1, only cohesive fractures in L1 occur.

While from the results of the pull-off test the adhesion to the substrate and to the polyurea-polyurethane coating L1 seems sufficient for both adhesion primer V1 and E1, adhesion primer V1 failed in the cutting test. Therefore, only adhesion primer E1 shows satisfactory strength of adhesion to the substrate and to polyurea-polyurethane coating L1.

### Example 3 - System 3

Adhesion primer E1 and comparative adhesion primer V1 were investigated for their strength of adhesion to an epoxy resin coating L2 and to a polyurea-polyurethane coating L1. The coating system has been applied to a substrate body of glass-fibre-reinforced unsaturated polyester resin. The interlaminar adhesion was also investigated.

The substrate body was sanded as described for System 1. The sanded substrate body was coated with a commercially available 2K epoxy resin coating L2 in a wet film thickness of 250 µm, using an Ultra Flock roller (from Friess), at 20 °C and 50% relative humidity. The coated substrate was dried at 23°C for 7 days.

Subsequently the dried surface of coating film L2 was sanded with sandpaper (240 grade, from Sia). On one part of the substrate coated with L2, adhesion primer V1 was applied; on another part adhesion primer E1 was applied. Both adhesion primers were applied with a wet film thickness of 10 µm using a MicroCrater roller (from Friess), at 20°C and 50% relative humidity.

After flashing off of solvent, the thus-formed adhesion-promoting layer was recoated by applying coating composition L1 in a wet film thickness of 350 µm, using an Ultra Flock roller (from Friess), at 20 °C and 50% relative humidity. After application of coating layer L1, the complete system was dried at 23°C for 7 days to allow curing of the adhesion primer and L1.

The dried surface was then prepared for the pull-off test as described for System 2, and the pull-off test was conducted as described for System 2. The results are set out in Table 5.

**Table 5: Results of tensile adhesion testing for System 3**

| **System 3: Substrate body-L2-V1-L1** | | | | **System 3: Substrate body-L2-E1-L1** | | |
|---|---|---|---|---|---|---|
| Dolly | Adhesion force [MPa] | Fracture pattern | | Dolly | Adhesion force [MPa] | Fracture pattern |
| 1 | 6.74 | 100% D | | 1 | 6.23 | 100% D |
| 2 | 6.79 | 100% D | | 2 | 6.27 | 10% A, 90% D |
| 3 | 7.76 | 100% D | | 3 | 6.29 | 10% A, 90% D |
| Ø | 7.10 | 100% D | | Ø | 6.26 | 7% A, 93% D |
| σ ± | 0.58 | | | σ ± | 0.03 | |

| | | | | | | |
|---|---|---|---|---|---|---|
| Key: A, Y, and Y/Z as for Tables 2-4 A/B adhesive fracture between substrate body and L2 B cohesive fracture in L2 B/C adhesive fracture between L2 and adhesion primer V1 or E1 C cohesive fracture in adhes ion primer V1 or E1 C/D adhesive fracture between adhesion primer V1 or E1 and L1 D cohesive fracture in L1 D/Y adhesive fracture between L1 and adhesive | | | | | | |

Cutting tests were carried out in the same way as described for System 2. It was not possible to peel off any coating film, both for the system with adhesion primers V1 and with adhesion primer E1.

The results show sufficient and comparable adhesion strength to epoxy resin coating L2 and to polyurea-polyurethane coating L1 for both adhesion primer V1 and E1, since cohesive fractures only occurred in the substrate body and in polyurea-polyurethane coating L1. Thus, interlaminar adhesion is sufficient for both adhesion primers.

### Example 4 - System 4

Adhesion primer E1 and comparative adhesion primer V1 were investigated for their strength of adhesion to a polyurea coating (based on an aspartic diester) L3 and to polyurea-polyurethane coating L1, with L3 being applied to a substrate body of glass-fibre-reinforced unsaturated polyester resin that was already coated with an epoxy resin coating L2. The interlaminar adhesion was also investigated.

Substrate body coated with coating L2 was prepared as described for System 3.

In System 4, a commercially available polyurea coating (based on an aspartic diester) L3 was applied in a wet film thickness of 250 µm to coating L2, using an Ultra Flock roller (from Friess), at 20°C and 50% relative humidity. The L2/L3 coated substrate was dried at 23°C for 7 days.

The dried surface was subsequently sanded with sandpaper (240 grade, from Sia), after which either comparative adhesion primer V1 or adhesion primer E1 were applied. After flashing off solvent for 30 minutes, polyurea-polyurethane coating L1 was applied in the same way as described under System 3.

Preparation for the pull-off test and the pull-off test itself were carried out in accordance as described for System 2. The results are set out in Table 6.

**Table 6: Results of tensile adhesion testing for System 4**

| **System 4: Substrate body-L2-L3-V1-L1** | | | | **System 4: Substrate body-L2-L3-E1-L1** | | |
|---|---|---|---|---|---|---|
| Dolly | Adhesion force [MPa] | Fracture pattern | | Dolly | Adhesion force [MPa] | Fracture pattern |
| 1 | 6.80 | 40% A, 60% B | | 1 | 6.17 | 90% E, 10% Y |
| 2 | 6.91 | 100% E | | 2 | 6.74 | 100% E |
| 3 | 7.41 | 100% E | | 3 | 6.08 | 80% A, 20% B |
| Ø | 7.04 | 13% A, 20% B, 67% E | | Ø | 6.33 | 27% A, 7% B, 63% E, 3% Y |
| σ ± | 0.33 | | | σ ± | 0.36 | |

| | | | | | | |
|---|---|---|---|---|---|---|
| Key: A, Y, and Y/Z as for Tables 2-5 A/B adhesive fracture between substrate body and L2 B cohesive fracture in L2 B/C adhesive fracture between L2 and L3 C cohesive fracture in L3 C/D adhesive fracture between L3 and adhesion primer V1 or E1 D cohesive fracture in adhesion primer V1 or E1 D/E adhesive fracture between adhesion primer V1 or E1 and L1 E cohesive fracture in L1 E/Y adhesive fracture between L1 and adhesive | | | | | | |

Cutting tests were carried out in the same way a described for System 2. It was not possible to peel off any coating film, both for the system with adhesion primers V1 and with adhesion primer E1.

The results show sufficient and comparable adhesion strength to polyurea coating L3 and to polyurea-polyurethane coating L1 for both adhesion primer V1 and E1, since cohesive fractures only occurred in the substrate body, in epoxy resin coating L2, in polyurea-polyurethane coating L1, and in the adhesive layer. Accordingly, sufficient interlaminar adhesion is achieved with both adhesion primers.

### System 5

Adhesion primer E1 and comparative adhesion primer V1 were investigated for their strength of adhesion to a polyurea coating (based on an aspartic di-ester) L4 and to polyurea-polyurethane coating L1, with L4 being applied to a substrate body of glass-fibre-reinforced unsaturated polyester resin already coated with an epoxy resin coating L2 (Table 7). The interlaminar adhesion was also investigated.

The substrate body with epoxy resin film L2 was prepared as indicated for System 3.

In System 5, a commercially available polyurethane coating (based on an acrylate polyol) L4 was applied in a wet film thickness of 225 µm to the epoxy resin film L2, using an Ultra Flock roller (from Friess), at 20°C and 50% relative humidity. The L2/L4 coated substrate was dried at 23°C for 7 days.

The dried surface was subsequently sanded with sandpaper (240 grade, from Sia), after which comparative adhesion primer V1 or adhesion primer E1 and polyurea-polyurethane coating L1 were applied, in the same way as described under System 3.

Preparation for the pull-off test and the pull-off test itself, were carried out in accordance with the details under System 2. The results are set out in Table 7.

**Table 7: Results of tensile adhesion testing for System 5**

| **System 5: Substrate body-L2-L4-V1-L1** | | | | **System 5: Substrate body-L2-L4-E1-L1** | | |
|---|---|---|---|---|---|---|
| Dolly | Adhesion force [MPa] | Fracture pattern | | Dolly | Adhesion force [MPa] | Fracture pattern |
| 1 | 6.83 | 90% E, 10% Y | | 1 | 6.12 | 100% E |
| 2 | 7.17 | 40% A, 60% B | | 2 | 6.74 | 100% E |
| 3 | 7.56 | 100% E | | 3 | 6.04 | 100% A |
| Ø | 7.19 | 13% A, 20% B, 63% E, 3% Y | | Ø | 6.30 | 33% A, 67% E |
| σ ± | 0.37 | | | σ ± | 0.38 | |

| | | | | | | |
|---|---|---|---|---|---|---|
| Key: A, Y, and Y/Z as for Tables 2-6 A/B adhesive fracture between substrate body and L2 B cohesive fracture in L2 B/C adhesive fracture between L2 and L4 C cohesive fracture in L4 C/D adhesive fracture between L4 and adhesion primer V1 or E1 D cohesive fracture in adhesion primer V1 or E1 D/E adhesive fracture between adhesion primer V1 or E1 and L1 E cohesive fracture in L1 E/Y adhesive fracture between L1 and adhesive | | | | | | |

Cutting tests were carried out in the same way a described for System 2. It was not possible to peel off any coating film, both for the system with adhesion primers V1 and with adhesion primer E1.

The results show that sufficient and comparable strength of adhesion to the polyurethane coating L4 and to the polyurea-polyurethane coating L1 is achieved for both adhesion primers V1 and E1, since cohesive fractures only occurred in the substrate body, in the epoxy resin coating L2, in the polyurea-polyurethane coating L1, and in the adhesive.

### System 6

Adhesion primer E1 and comparative adhesion primer V1, were tested for their strength of adhesion to a polyurea-polyurethane coating L1 and to a substrate body of glass-fibre reinforced epoxy resin (Table 8).

Adhesion primer V1 or adhesion primer E1 were applied to the substrate body as described for System 1. After 1 hour or after 8 hours of drying (23 °C), a commercially available anti-erosion leading edge protection coating composition L1 was applied in a wet film thickness of 400 µm using an Ultra Flock roller (from Friess), at 20 °C and 50% relative humidity. The coated substrate was then dried at 23°C for 7 days to allow curing of the entire coating system.

The dried surface was roughened with P120 sandpaper (from Starcke Schleifmittelwerk) and dedusted using Staubfix standard 456/1 (from Pajarito). SikaForce-7818 L7 adhesive (from Sika) was applied to the topmost coating film, and this system was aligned in a centering device with an aluminum testing die having a diameter of 2 cm and fixed at room temperature (about 23°C) for a period of 24 hours, corresponding to the cure time of the adhesive.

### Pull-off test

After 7 days conditioning at about 23°C and 50% relative humidity, tensile adhesion of the multi-coat system was determined using a Positest AT-A instrument (ex. DeFelsko). Each test was carried out in triplicate. The results are set out in Table 8a-b.

In addition, a coated substrate as described above, but without adhesion primer was prepared and tested. Coating layer L1 was directly applied to the substrate body. These results are set out in Table 8c.

**Table 8a: Tensile adhesion testing for System 6 with coating L1 applied after 1 hour**

| **System 6: Substrate body-V1-L1 Application L1 after 1h** | | | | **System 6: Substrate body-E1-L1 Application L1 after 1h** | | |
|---|---|---|---|---|---|---|
| Dolly | Adhesion force [MPa] | Fracture pattern | | Dolly | Adhesion force [MPa] | Fracture pattern |
| 1 | 10.17 | 40% C, 40% Y, 20% Y/Z | | 1 | 11.16 | 70% C, 30% Y/Z |
| 2 | 10.99 | 70% C, 20% Y, 10% Y/Z | | 2 | 11.85 | 10% B/C, 70% C, 20% Y/Z |
| 3 | 10.46 | 70% C, 20% Y, 10% Y/Z | | 3 | 11.95 | 60% C, 40% Y/Z |
| Ø | 10.54 | 60% C, 27% Y, 13% Y/Z | | Ø | 11.65 | 3% B/C, 67% C, 30% Y/Z |
| σ ± | 0.42 | | | σ ± | 0.43 | |

**Table 8b: Tensile adhesion testing for System 6 with coating L1 applied after 8 hours**

| **System 6: Substrate body-V1-L1 Application L1 after 8h** | | | | **System 6: Substrate body-E1-L1 Application L1 after 8h** | | |
|---|---|---|---|---|---|---|
| Dolly | Adhesion force [MPa] | Fracture pattern | | Dolly | Adhesion force [MPa] | Fracture pattern |
| 1 | 10.62 | 90% Y, 10% Y/Z | | 1 | 9.96 | 50% Y, 50% Y/Z |
| 2 | 10.08 | 80% Y, 20% Y/Z | | 2 | 11.02 | 30% C, 40% Y, 30% Y/Z |
| 3 | 9.85 | 90% Y, 10% Y/Z | | 3 | 10.82 | 80% Y, 20% Y/Z |
| Ø | 10.18 | 87% Y, 13% Y/Z | | Ø | 10.60 | 10% C, 57% Y, 33% Y/Z |
| σ ± | 0.40 | | | σ ± | 0.56 | |

| | | | | | | |
|---|---|---|---|---|---|---|
| Key: as for Table 4 (System 2) | | | | | | |

**Table 8c: Tensile adhesion testing for System 6 without adhesion primer**

| **System: Substrate body - L1** | | |
|---|---|---|
| Dolly | Adhesion force [MPa] | Fracture pattern |
| 1 | 8.01 | 100% A/B |
| 2 | 8.71 | 100% A/B |
| 3 | 8.81 | 100% A/B |
| Ø | 8.51 | 100% A/B |
| σ ± | 0.44 | |

| | | |
|---|---|---|
| Key: A, Y, and Y/Z as for Tables 2-7 A/B adhesive fracture between substrate body and L1 B cohesive fracture in L1 B/Y adhesive fracture between L1 and adhesive | | |

The results from Table 8a-b show that the use of adhesion primer E1 results in higher tensile adhesion values compared to the use of adhesion primer V1. Cohesive fractures primarily occur in coating film L1 (after 1 h, Table 8a) and in the adhesive (after 8 hours, Table 8b) for both adhesion primers. With adhesion primer E1, more instances of adhesive fracture between adhesive and testing die occur. When fractures occur in the adhesive (category Y) or when fractures occur between adhesive and dolly (category Y/Z) with high tensile adhesion values, the interlaminar adhesion of the adhesion primer is considered to satisfy the requirements.

The results thus show that adhesion primer E1 has a strength of adhesion at least comparable to that of V1 to glass fiber-reinforced epoxy resin-based substrate bodies and to coating films based on polyurea-polyurethane.

Without the use of an adhesion primer (Table 8c), relatively high tensile adhesion values can still be achieved, but adhesive fractures occur without exception between substrate body and L1. An adhesion primer therefore appears necessary to obtain the desired strength of adhesion to substrate bodies of glass fiber-reinforced epoxy polymer.

### System 7

Adhesion primer E1 and comparative adhesion primer V1 were investigated for their adhesion strength to a polyurea-polyurethane coating L1 and to a glass fiber-reinforced, epoxy resin-based substrate body to which a putty L5 has been applied.

A glass fiber-reinforced, epoxy resin-based substrate body, five millimeters thick (from ONYX), was first sanded with sandpaper (80 grade, from Sia). A commercially available polyurethane-based putty L5 was applied to the sanded substrate body using a Japan applicator at 20 °C and 50% relative humidity.

Subsequently adhesion primer V1 or adhesion primer E1, and a polyurea-polyurethane coating L1 were applied to the putty L5 as described for System 2. After application of L1, the coated substrate was dried at 23°C for 7 days to allow curing of the entire coating system.

The dried surface was then prepared for the pull-off test and the pull-off test was conducted as described under System 6.

In addition, a coated substrate as described above, but without adhesion primer was prepared and tested. Coating layer L1 was directly applied to putty L5. These results are set out in Table 9b.

**Table 9a: Results of tensile adhesion testing for System 7**

| **System 7: Substrate body-L5-V1-L1** | | | | **System 7: Substrate body-L5-E1-L1** | | |
|---|---|---|---|---|---|---|
| Dolly | Adhesion force [MPa] | Fracture pattern | | Dolly | Adhesion force [MPa] | Fracture pattern |
| 1 | 8.87 | 100% B | | 1 | 8.50 | 100% D |
| 2 | 9.01 | 100% B | | 2 | 8.10 | 100% D |
| 3 | 8.81 | 100% B | | 3 | 7.83 | 60% D, 40% Y |
| | | | | 4 | 8.57 | 100% D |
| Ø | 8.90 | 100% B | | Ø | 8.25 | 90% D, 10% Y |
| σ ± | 0.10 | | | σ ± | 0.35 | |

| | | | | | | |
|---|---|---|---|---|---|---|
| Key: A, Y, and Y/Z as for Tables 2-8 A/B adhesive fracture between substrate body and putty L5 B cohesive fracture in putty L5 B/C adhesive fracture between putty L5 and adhesion primer V1 or E1 C cohesive fracture in adhesion primer V1 or E1 C/D adhesive fracture between adhesion primer V1 or E1 and L1 D cohesive fracture in L1 D/Y adhesive fracture between L1 and adhesive | | | | | | |

**Table 9b: Results of tensile adhesion testing for System 7 adhesion primer**

| **System: Substrate body - L5 - L1** | | |
|---|---|---|
| Dolly | Adhesion force [MPa] | Fracture pattern |
| 1 | 9.50 | 30% B/C, 60% C, 10% Y |
| 2 | 8.83 | 20% B/C, 70% C, 10% Y |
| 3 | 7.90 | 30% B/C, 40% C, 30% Y |
| 4 | 8.79 | 30% B/C, 40% C, 30% Y |
| Ø | 8.76 | 28% B/C, 53% C, 19% Y |
| σ ± | 0.66 | |

| | | |
|---|---|---|
| Key: A, Y, and Y/Z as for Tables 2-8 A/B adhesive fracture between substrate body and putty L5 B cohesive fracture in putty L5 B/C adhesive fracture between putty L5 and L1 C cohesive fracture in L1 C/Y adhesive fracture between L1 and adhesive | | |

The results show that an adhesion primer (compare Table 9b) is required for a multi-coat system of putty L5 and leading edge protection coating L1 in order to achieve strong adhesion, despite both systems being polyurethane-based. The pull-off tests show primarily cohesive fractures in coating film L1, followed by adhesive fractures between putty L5 and coating film L1.

The use of an adhesion primer significantly strengthens the adhesion of coating film L1 on putty L5, as shown by the fact that only cohesive fractures occur (compare Table 9a). The fracture point, i.e. the point with the lowest strength of adhesion, is found exclusively in putty L5 when using adhesion primer V1. When using adhesion primer E1, fracture points are found in coating film L1 and in the adhesive. Cohesive fractures occurring in combination with high tensile adhesion values are interpreted as adhesion strengths which satisfy the requirements for interlaminar adhesion.

## Claims

1. A process for repairing a coating film comprising:
(1) applying an adhesion primer directly to a substrate;
(2) forming a polymer film from the applied adhesion primer to obtain an adhesion-promoting layer;
(3) applying a further layer of coating composition to the adhesion-promoting layer; and subsequently
(4) allowing the further layer of coating composition to cure to form a further coating layer,
wherein the substrate is a substrate body with an original coating that has defects,
wherein the adhesion primer comprises components (A) and (B), wherein component (A) is a binder component comprising:
(A1) a hydroxy-functional (meth)acrylate resin; and
(A2) a hydroxy-functional epoxy resin,
and component (B) is a curing component comprising:
(B1) a polyisocyanate; and
(B2) an epoxy-functional organosilane.

2. A process according to claim 1, wherein the epoxy-functional organosilane (B2) is of formula (I)
X₄₋ₙSi-(R-E)ₙ (I)
wherein
X is a halogen, an alkyl or alkoxy group, or H, preferably a methoxy or ethoxy group;
R is an organic divalent radical with a primary carbon chain with at least one alkylene moiety, preferably two alkylene moieties and a bridging heteroatom, preferably a bridging oxygen atom, wherein the primary carbon chain preferably has 4 to 12 carbon atoms;
E is an epoxy group; and
n is 1, 2 or 3, preferably n is 1.

3. A process according to claim 1 or 2, wherein the epoxy-functional organosilane (B2) is (3-glycidyloxypropyl)trimethoxysilane.

4. A process according to any one of claims 1 to 3, wherein the hydroxy-functional (meth)acrylate resin (A1) has a hydroxyl number - determined in accordance with DIN EN ISO 4629 - in the range of from 150 to 300 mg KOH/g, preferably of from 200 to 250 mg KOH/g.

5. A process according to any one of claims 1 to 4, wherein the hydroxy-functional epoxy resin (A2) has an epoxide group content - determined in accordance with DIN EN ISO 3001 - in the range of from 200 to 1,500 mmol/kg, preferably of from 250 to 400 mmol/kg.

6. A process according to any one of claims 1 to 5, wherein the hydroxy-functional epoxy resin (A2) has a glass transition temperature (T_{g}) - determined in accordance with DIN EN ISO 11357 (10K/min heating rate) - in the range of from 25 °C to 90 °C.

7. A process according to any one of claims 1 to 6, wherein component (A) comprises the hydroxy-functional (meth)acrylate resin (A1) and the hydroxy-functional epoxy resin (A2) in a weight ratio in the range of from 10:1 to 2:1, preferably of from 7:1 to 4:1.

8. A process according to any one of claims 1 to 7, wherein polyisocyanate (B1) is an aliphatic di-isocyanate or a dimer or trimer thereof.

9. A process according to any one of claims 1 to 8, wherein the substrate is partly sanded before application of the adhesion primer.

10. A process according to any one of claims 1 to 9, wherein the substrate body is made of a glass fiber-reinforced synthetic polymeric material based on an unsaturated polyester resin, an epoxy resin, or a vinyl ester resin.

11. A process according to any one of claims 1 to 10, wherein the original coating and/or the further coating layer is based on polyurethane.

12. A process according to any one of claims 1 to 11, wherein the defects in the original coating have been caused by mechanical action.

13. Use of an adhesion primer as specified in any one of claims 1 to 8 to improve the adherence of a further coating layer to a substrate that is a substrate body with an original coating that has defects, wherein the substrate body is preferably of glass fiber-reinforced unsaturated polyester resin, of glass fiber-reinforced epoxy resin, or of glass fiber-reinforced vinyl ester resin, wherein the substrate optionally has putty-filled defects, and wherein the further coating layer preferably is a polyurethane resin based coating.

14. Use according to claim 13, wherein the substrate is a rotor blade.

15. A substrate coated with a coating film that has been repaired according to a process according to any one of claims 1 to 12.

## Patentansprüche

1. Verfahren zur Reparatur eines Beschichtungsfilms, umfassend:
(1) Aufbringen einer Haftgrundierung direkt auf ein Substrat;
(2) Bilden einer Polymerfolie aus der aufgebrachten Haftgrundierung zum Erhalt einer haftungsfördernden Schicht;
(3) Aufbringen einer weiteren Beschichtungszusammensetzungsschicht auf die haftungsfördernde Schicht und anschließend
(4) Härtenlassen der weiteren Beschichtungszusammensetzungsschicht zur Bildung einer weiteren Beschichtungsschicht,
wobei es sich bei dem Substrat um einen Substratkörper mit einer Originalbeschichtung, die Defekte aufweist, handelt,
wobei die Haftgrundierung Komponenten (A) und (B) umfasst, wobei
es sich bei Komponente (A) um eine Bindemittelkomponente handelt, die
(A1) ein hydroxyfunktionelles (Meth)acrylatharz und
(A2) ein hydroxyfunktionelles Epoxidharz
umfasst,
und es sich bei Komponente (B) um eine Härtungskomponente handelt, die
(B1) ein Polyisocyanat und
(B2) ein epoxidfunktionelles Organosilan
umfasst.

2. Verfahren nach Anspruch 1, wobei das epoxidfunktionelle Organosilan (B2) die Formel (I) aufweist:
X₄₋ₙSi-(R-E)ₙ (I)
wobei
X für ein Halogen, eine Alkyl- oder Alkoxygruppe oder H, vorzugsweise eine Methoxy- oder Ethoxygruppe, steht;
R für einen organischen zweiwertigen Rest mit einer primären Kohlenstoffkette mit mindestens einer Alkylengruppierung, vorzugsweise zwei Alkylengruppierungen und einem verbrückenden Heteroatom, vorzugsweise einem verbrückenden Sauerstoffatom, steht, wobei die primäre Kohlenstoffkette vorzugsweise 4 bis 12 Kohlenstoffatome aufweist;
E für eine Epoxidgruppe steht und
n für 1, 2 oder 3 und vorzugsweise für 1 steht.

3. Verfahren nach Anspruch 1 oder 2, wobei es sich bei dem epoxidfunktionellen Organosilan (B2) um (3-Glycidyloxypropyl)trimethoxysilan handelt.

4. Verfahren nach einem der Ansprüche 1 bis 3, wobei das hydroxyfunktionelle (Meth)acrylatharz (A1) eine gemäß DIN EN ISO 4629 bestimmte Hydroxylzahl im Bereich von 150 bis 300 mg KOH/g, vorzugsweise von 200 bis 250 mg KOH/g, aufweist.

5. Verfahren nach einem der Ansprüche 1 bis 4, wobei das hydroxyfunktionelle Epoxidharz (A2) einen gemäß DIN EN ISO 3001 bestimmten Epoxidgruppengehalt im Bereich von 200 bis 1500 mmol/kg, vorzugsweise von 250 bis 400 mmol/kg, aufweist.

6. Verfahren nach einem der Ansprüche 1 bis 5, wobei das hydroxyfunktionelle Epoxidharz (A2) eine gemäß DIN EN ISO 11357 (Aufheizrate 10 K/min) bestimmte Glasübergangstemperatur (T_{g}) im Bereich von 25 °C bis 90 °C aufweist.

7. Verfahren nach einem der Ansprüche 1 bis 6, wobei Komponente (A) das hydroxyfunktionelle (Meth)acrylatharz (A1) und das hydroxyfunktionelle Epoxidarz (A2) in einem Gewichtsverhältnis im Bereich von 10:1 bis 2:1, vorzugsweise von 7:1 bis 4:1, umfasst.

8. Verfahren nach einem der Ansprüche 1 bis 7, wobei es sich bei dem Polyisocyanat (B1) um ein aliphatisches Diisocyanat oder ein Dimer oder Trimer davon handelt.

9. Verfahren nach einem der Ansprüche 1 bis 8, wobei das Substrat vor dem Aufbringen der Haftgrundierung teilweise geschliffen wird.

10. Verfahren nach einem der Ansprüche 1 bis 9, wobei der Substratkörper aus einem glasfaserverstärkten synthetischen Polymermaterial auf Basis eines ungesättigten Polyesterharzes, eines Epoxidharzes oder eines Vinylesterharzes besteht.

11. Verfahren nach einem der Ansprüche 1 bis 10, wobei die Originalbeschichtung und/oder die weitere Beschichtungsschicht auf Polyurethan basiert.

12. Verfahren nach einem der Ansprüche 1 bis 11, wobei die Defekte in der Originalbeschichtung durch mechanische Einwirkung verursacht wurden.

13. Verwendung einer Haftgrundierung gemäß einem der Ansprüche 1 bis 8 zur Verbesserung der Haftung einer weiteren Beschichtungsschicht auf einem Substrat, bei dem es sich um einen Substratkörper mit einer Originalbeschichtung, die Defekte aufweist, handelt, wobei der Substratkörper vorzugsweise aus glasfaserverstärktem ungesättigtem Polyesterharz, glasfaserverstärktem Epoxidharz oder glasfaserverstärktem Vinylesterharz besteht, wobei das Substrat gegebenenfalls mit Spachtel gefüllte Defekte aufweist, und wobei es sich bei der weiteren Beschichtungsschicht vorzugsweise um eine auf Polyurethanharz basierende Beschichtung handelt.

14. Verwendung nach Anspruch 13, wobei es sich bei dem Substrat um ein Rotorblatt handelt.

15. Substrat, das mit einem Beschichtungsfilm beschichtet ist, der nach einem Verfahren nach einem der Ansprüche 1 bis 12 repariert wurde.

## Revendications

1. Procédé pour la réparation d'un film de revêtement comprenant :
(1) l'application d'un primaire d'adhérence directement à un substrat ;
(2) la formation d'un film polymère à partir du primaire d'adhérence appliqué pour obtenir une couche de promotion d'adhérence ;
(3) l'application d'une couche supplémentaire de composition de revêtement à la couche de promotion d'adhérence ; et ultérieurement
(4) le fait de laisser durcir la couche supplémentaire de composition de revêtement pour former une couche de revêtement supplémentaire,
le substrat étant un corps de substrat comportant un revêtement d'origine qui possède des défauts,
le primaire d'adhérence comprenant des composants (A) et (B),
le composant (A) étant un composant de liant comprenant :
(A1) une résine (méth)acrylate hydroxyfonctionnelle ; et
(A2) une résine époxy hydroxyfonctionnelle,
et le composant (B) étant un composant de durcissement comprenant :
(B1) un polyisocyanate ; et
(B2) un organosilane époxyfonctionnel.

2. Procédé selon la revendication 1, l'organosilane époxyfonctionnel (B2) étant de formule (I)
X₄₋ₙSi-(R-E)ₙ (I)
X étant un halogène, un groupe alkyle ou alcoxy, ou H, préférablement un groupe méthoxy ou éthoxy ;
R étant un radical organique divalent comportant une chaîne carbonée primaire comportant au moins un fragment alkylène, préférablement deux fragments alkylène et un hétéroatome de pontage, préférablement un atome d'oxygène de pontage, la chaîne carbonée primaire possédant préférablement 4 à 12 atomes de carbone ;
E étant un groupe époxy ; et
n étant 1, 2 ou 3, préférablement n étant 1.

3. Procédé selon la revendication 1 ou 2, l'organosilane époxyfonctionnel (B2) étant le (3-glycidyloxypropyl)triméthoxysilane.

4. Procédé selon l'une quelconque des revendications 1 à 3, la résine (méth)acrylate hydroxyfonctionnelle (A1) possédant un indice d'hydroxyle - déterminé conformément à la norme DIN EN ISO 4629 - dans la plage de 150 à 300 mg de KOH/g, préférablement de 200 à 250 mg de KOH/g.

5. Procédé selon l'une quelconque des revendications 1 à 4, la résine époxy hydroxyfonctionnelle (A2) possédant une teneur en groupe époxyde - déterminée conformément à la norme DIN EN ISO 3001 - dans la plage de 200 à 1500 mmol/kg, préférablement de 250 à 400 mmol/kg.

6. Procédé selon l'une quelconque des revendications 1 à 5, la résine époxy hydroxyfonctionnelle (A2) possédant une température de transition vitreuse (Tᵥ) - déterminée conformément à la norme DIN EN ISO 11357 (vitesse de chauffage 10 K/min) - dans la plage de 25 °C à 90 °C.

7. Procédé selon l'une quelconque des revendications 1 à 6, le composant (A) comprenant la résine (méth)acrylate hydroxyfonctionnelle (A1) et la résine époxy hydroxyfonctionnelle (A2) en un rapport pondéral dans la plage de 10:1 à 2:1, préférablement de 7:1 à 4:1.

8. Procédé selon l'une quelconque des revendications 1 à 7, le polyisocyanate (B1) étant un diisocyanate aliphatique ou un dimère ou un trimère correspondant.

9. Procédé selon l'une quelconque des revendications 1 à 8, le substrat étant partiellement sablé avant application du primaire d'adhérence.

10. Procédé selon l'une quelconque des revendications 1 à 9, le corps de substrat étant composé d'un matériau polymérique synthétique renforcé par des fibres de verre à base d'une résine de polyester insaturé, d'une résine époxy, ou d'une résine d'ester de vinyle.

11. Procédé selon l'une quelconque des revendications 1 à 10, le revêtement d'origine et/ou la couche de revêtement supplémentaire étant à base de polyuréthane.

12. Procédé selon l'une quelconque des revendications 1 à 11, les défauts dans le revêtement d'origine ayant été causés par une action mécanique.

13. Utilisation d'un primaire d'adhérence tel que spécifié dans l'une quelconque des revendications 1 à 8 pour améliorer l'adhérence d'une couche de revêtement supplémentaire à un substrat qui est un corps de substrat comportant un revêtement d'origine qui possède des défauts, le corps de substrat étant préférablement composé de résine de polyester insaturé renforcée par des fibres de verre, de résine époxy renforcée par des fibres de verre, ou de résine d'ester de vinyle renforcée par des fibres de verre, le substrat possédant éventuellement des défauts remplis de mastic, et la couche de revêtement supplémentaire étant préférablement un revêtement à base de résine de polyuréthane.

14. Utilisation selon la revendication 13, le substrat étant une lame de rotor.

15. Substrat revêtu par un film de revêtement qui a été réparé selon un procédé selon l'une quelconque des revendications 1 à 12.
